# EUROPEAN PATENT APPLICATION

(11) **EP 4 563 662 A1**
(43) Date of publication of application: **04.06.2025**
(21) Application number: 23846229.5
(22) Date of filing: 11.07.2023
(51) Int. Cl.: C08L 83/04, C08K 3/22, C08K 3/28, C08K 5/5419, C08K 9/06, C09K 5/14

(54) **THERMALLY CONDUCTIVE SILICONE COMPOSITION AND PRODUCTION METHOD THEREFOR**

(30) Priority: 29.07.2022 JP 2022121056
(71) Applicant: SHIN-ETSU CHEMICAL CO., LTD., Tokyo 1000005 (JP)
(72) Inventor: IWATA, Mitsuhiro, Annaka-shi, Gunma 379-0224 (JP); TABATA, Yuji, Annaka-shi, Gunma 379-0224 (JP)
(74) Representative: Mewburn Ellis LLP
(86) International application number: PCT/JP2023/025599
(87) International publication number: WO 2024/024498

(57) **Abstract**

This thermally conductive silicone composition contains:
(A) an organopolysiloxane having a kinematic viscosity of 10-10,000 mm²/s;
(B) an organopolysiloxane having a kinematic viscosity of 10-100,000 mm²/s;
(C) an aluminum nitride powder which has an oxygen content of 0.5 mass% or less, a BET specific surface area of 1.0 m²/g or less, an average particle diameter of 3-40 µm, and a proportion of coarse particles having particle diameters of 44-105 µm in a volume-based laser diffraction type particle size distribution of 10.0 mass% or less relative to component (C) as a whole; and
(D) an irregularly shaped zinc oxide powder at a quantity whereby the blending ratio of component (C) and component (D) is 5.0:5.0 to 9.5:0.5 in terms of mass ratio and the total amount of powders of components (C) and (D) is 70-85 vol% of the composition as a whole.
The thermally conductive silicone composition maintains fluidity, exhibits good handleability, exhibits excellent heat dissipation performance, and exhibits excellent durability and reliability under conditions of high temperature and conditions of high temperature and high humidity.

## Description

### TECHNICAL FIELD

This invention relates to a heat conductive silicone composition having satisfactory insulation and heat conduction and a method of preparing the same.

### BACKGROUND ART

Many electronic parts generate heat during service. For proper functioning of the electronic part, it is necessary to remove the heat from the part. In particular, integrated circuit devices like CPU in personal computers produce increased amounts of heat due to the acceleration of operating frequency. Thus thermal management is of significance.

For heat removal, a number of methods have been proposed. For electronic parts with much heat release, it is proposed to dispose a heat conductive material such as heat conductive grease or sheet between the electronic part and a member such as heat sink for releasing the heat from the electronic part (see Patent Documents 1 and 2). These compositions, however, are not satisfactory for heat dissipation where specification thickness largely differs.

Known heat conductive materials include compositions which are based on silicone fluid and loaded with zinc oxide or alumina powder (see Patent Documents 3 and 4). The compositions, however, are unsatisfactory in heat resistance at 200°C.

Several heat conductive materials use aluminum nitride powder for improving heat conduction. Patent Document 1, cited above, discloses a heat conductive material comprising a liquid organosilicone carrier, silica fibers, and at least one member selected from dendritic zinc oxide, lamellar aluminum nitride, and lamellar boron nitride. Patent Document 5 discloses a silicone grease composition comprising a specific organopolysiloxane and spherical hexagonal aluminum nitride powder having a certain particle size range. Patent Document 6 discloses a heat conductive silicone grease composition using a combination of an aluminum nitride powder having a small particle size with an aluminum nitride powder having a large particle size. Patent Document 7 discloses a heat conductive silicone grease composition using a combination of an aluminum nitride powder with a zinc oxide powder. Patent Document 8 discloses a heat conductive grease composition using an aluminum nitride powder which has been surface-treated with organosilane. All these compositions are unsatisfactory in the aspects of durability and reliability.

Patent Document 9 discloses a heat conductive polysiloxane composition using aluminum nitride particles of irregular shape having an average particle size of 30 to 150 µm. The proportion of coarse particles is not defined. Using plural kinds of aluminum nitride having a broad particle size distribution is insufficient to attain the goal of high thermal conductivity because of poor loading. In addition, post-heating properties are unsatisfactory.

Aluminum nitride has a thermal conductivity of 70 to 270 W/(m·K) whereas diamond has a higher thermal conductivity of 900 to 2,000 W/(m·K). Patent Document 10 discloses a heat conductive silicone composition comprising a silicone resin, diamond, zinc oxide, and a dispersant, which is unsatisfactory in post-heating properties.

Metals have a high thermal conductivity and may be used where the insulation of electronic parts is unnecessary. Patent Document 11 discloses a heat conductive grease composition comprising a base fluid such as silicone fluid in admixture with a metallic aluminum powder, which is unsatisfactory because of the lack of insulation.

All these heat conductive materials and heat conductive greases fail to comply with the increased heat generation of advanced IC devices such as CPU.

A material based on a silicone fluid loaded with a heat conductive filler has a thermal conductivity which is little dependent on the thermal conductivity of the filler if the volume fraction of the filler is equal to or less than 0.6, as understood from the theoretical equation of Maxwell or Bruggeman. The thermal conductivity of the filler becomes significant only when the volume fraction of the filler is in excess of 0.6. This suggests that an increase in the thermal conductivity of heat conductive grease is first dependent on how to heavily load the grease with a heat conductive filler and if heavy loading is possible, how to select a filler having a higher thermal conductivity. However, the heavy loading interferes with the flow of heat conductive grease and detrimentally affects the efficiency of application like dispensing and screen printing, making the grease unacceptable on practical use. Further, a less flowing grease cannot conform to fine irregularities on the surface of electronic parts or heat sinks, giving rise to the problem of increased contact thermal resistance.

For the purpose of obtaining a heat conductive material which is heavily loaded and smoothly flowing, an attempt is made to incorporate an alkoxy group-containing organopolysiloxane in a heat conductive material comprising a heat conductive filler, the alkoxy group-containing organopolysiloxane serving for the surface treatment of the heat conductive filler for significantly increasing its dispersibility. See Patent Document 12 and 13. However, the treating agents can be altered by hydrolysis or the like under hot humid conditions, which undesirably causes the heat conductive materials to degrade their performance.

### PRIOR ART DOCUMENTS

### PATENT DOCUMENTS

Patent Document 1: JP-A S56-28264
Patent Document 2: JP-A S61-157587
Patent Document 3: JP-B S52-33272
Patent Document 4: JP-B S59-52195
Patent Document 5: JP-A H02-153995
Patent Document 6: JP-A H03-014873
Patent Document 7: JP-A H10-110179
Patent Document 8: JP-A 2000-063872
Patent Document 9: JP 6246986
Patent Document 10: JP-A 2002-030217
Patent Document 11: JP-A 2000-063873
Patent Document 12: JP-A 2004-262972
Patent Document 13: JP-A 2005-162975

### SUMMARY OF INVENTION

### TECHNICAL PROBLEM

An object of the invention, which has been made in consideration of the above-mentioned problems, is to provide a heat conductive silicone composition which remains smoothly flowable and easily handleable even when a heat conductive filler is heavily loaded in order to impart satisfactory insulation and heat conduction, has excellent heat dissipation, and is improved in durability and reliability under hot or hot humid conditions, and a method of preparing the same.

### SOLUTION TO PROBLEM

Making extensive investigations to attain the above object, the inventors have found that using specific amounts of (C) aluminum nitride powder and (D) zinc oxide powder of irregular shape, there is obtained a heat conductive silicone composition which has good insulation and high heat conduction, is easy to handle due to the maintenance of smooth flow, and further has reduced contact thermal resistance due to possible conformity to fine irregularities and consequently, good heat dissipation performance, and that the composition is fully durable under hot or hot humid conditions and improved in reliability on device packaging. The invention is predicated on this finding.

The invention is defined below.
1. A heat conductive silicone composition comprising
   (A) 5 to 100 parts by weight of an organopolysiloxane represented by the general formula (1): 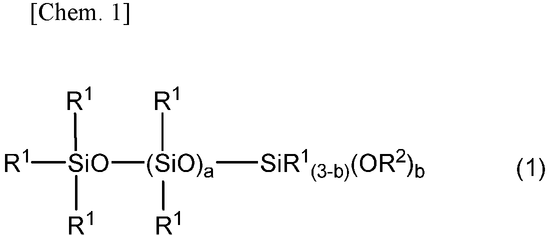 wherein R¹ is independently a substituted or unsubstituted monovalent hydrocarbon group, R² is independently an alkyl, alkoxyalkyl, alkenyl or acyl group, a is an integer of 5 to 100, and b is an integer of 1 to 3, and having a kinematic viscosity at 25°C of 10 to 10,000 mm²/s,
   (B) 0 to 95 parts by weight of an organopolysiloxane represented by the average compositional formula (2):

      R³_{c}SiO_{(4-c)/2} (2)

      wherein R³ is independently a C₁-C₁₈ substituted or unsubstituted monovalent hydrocarbon group and c is a number of 1.8 to 2.2, and having a kinematic viscosity at 25°C of 10 to 100,000 mm²/s, the total amount of components (A) and (B) being 100 parts by weight,
   (C) an aluminum nitride powder having an oxygen content of up to 0.5% by weight, a BET specific surface area of up to 1.0 m²/g, and an average particle size of 3 to 40 µm, in which the proportion of coarse particles with a particle size of 44 to 105 µm in a volume basis laser diffraction type particle size distribution is up to 10.0% by weight based on overall component (C), and
   (D) an irregular shape zinc oxide powder having an average particle size of 0.01 µm to less than 3.0 µm in which the proportion of coarse particles with a sieve particle size of 25 to 45 µm is up to 0.2% by weight based on overall component (D),
      components (C) and (D) being blended in a weight ratio of from 5.0:5.0 to 9.5:0.5, the total amount of powder components (C) and (D) being 70 to 85% by volume of the overall composition,
      the silicone composition having a thermal conductivity of 4.0 to 9.2 W/m·K as measured by the hot disk method according to ISO 22007-2 and a viscosity at 25°C of 5 to 800 Pa·s as measured by a spiral viscometer with rotor A at a rotational speed 10 rpm.
2. The silicone composition of 1 wherein component (C) is an aluminum nitride powder of rounded shape.
3. The silicone composition of 1 or 2, further comprising (E) a volatile solvent for dispersing or dissolving components (A) and (B), in an amount of up to 100 parts by weight per 100 parts by weight of components (A) and (B) in total.
4. The silicone composition of any one of 1 to 3, further comprising (F) 0.1 to 50 parts by weight of an alkoxysilane represented by the general formula (3):

   R⁴_{d}R⁵ₑSi(OR⁶)_{4-d-e} (3)

   wherein R⁴ is independently a C₉-C₁₅ alkyl group, R⁵ is independently a C₁-C₈ substituted or unsubstituted monovalent hydrocarbon group, R⁶ is independently a C₁-C₆ alkyl group, d is an integer of 1 to 3, e is an integer of 0 to 2, and d+e is an integer of 1 to 3, with which components (C) and (D) are surface-treated.
5. The silicone composition of any one of 1 to 4 which has a viscosity at 25°C of up to 1,000 Pa·s as measured by a spiral viscometer at a rotational speed of 10 rpm after it is degraded by heating at 200°C for 100 hours.
6. The silicone composition of any one of 1 to 5 which has a thermal resistance at 25°C of up to 15 mm²-K/W as measured by the laser flash method after it is allowed to stand in a 130°C/85% RH atmosphere for 96 hours.
7. The silicone composition of any one of 1 to 6, having a volume resistivity of at least 10⁹ Ω·cm.
8. A method of preparing the heat conductive silicone composition of any one of 1 to 7, comprising the step of mixing components (A) to (D).

### ADVANTAGEOUS EFFECTS OF INVENTION

The heat conductive silicone composition of the invention has good insulation and high heat conduction, is easy to handle due to the maintenance of smooth flow, and has good heat dissipation performance, and is fully durable under hot or hot humid conditions and improved in reliability on device packaging. A method for preparing the same is also provided.

### DESCRIPTION OF EMBODIMENTS

Now the invention is described in detail. As used herein, the amount expressed in "parts by weight" and viscosity are measurements at 25°C. The "heat conductive silicone composition" is sometimes simply referred to as "silicone composition."

### [Component (A)]

Component (A) is an organopolysiloxane represented by the general formula (1): 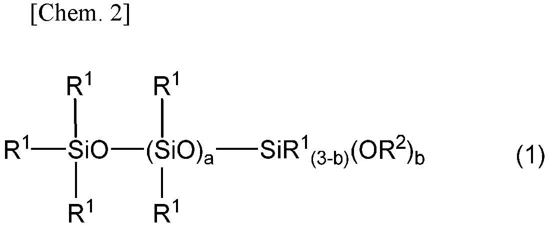 wherein R¹ is independently a substituted or unsubstituted monovalent hydrocarbon group, R² is independently an alkyl, alkoxyalkyl, alkenyl or acyl group, "a" is an integer of 5 to 100, and "b" is an integer of 1 to 3, and having a kinematic viscosity at 25°C of 10 to 10,000 mm²/s.

R¹ is independently a substituted or unsubstituted monovalent hydrocarbon group. Examples include straight, branched and cyclic alkyl, alkenyl, aryl, aralkyl and haloalkyl groups. Suitable straight alkyl groups include methyl, ethyl, propyl, hexyl, and octyl. Suitable branched alkyl groups include isopropyl, isobutyl, tert-butyl, and 2-ethylhexyl. Suitable cyclic alkyl groups include cyclopentyl and cyclohexyl. Suitable alkenyl groups include vinyl and allyl. Suitable aryl groups include phenyl and tolyl. Suitable aralkyl groups include 2-phenylethyl and 2-methyl-2-phenylethyl. Suitable haloalkyl groups include 3,3,3-trifluoropropyl, 2-(nonafluorobutyl)ethyl, and 2-(heptadecafluorooctyl)ethyl. R¹ is preferably methyl or phenyl.

R² is independently an alkyl, alkoxyalkyl, alkenyl or acyl group. Suitable alkyl groups include straight, branched and cyclic alkyl groups as exemplified above for R¹. Suitable alkoxyalkyl groups include methoxyethyl and methoxypropyl. Suitable alkenyl groups include such groups as exemplified above for R¹. Suitable acyl groups include acetyl and octanoyl. R² is preferably an alkyl group, especially methyl or ethyl.

The subscript "a" is an integer of 5 to 100, preferably 5 to 50, more preferably 5 to 30, and b is an integer of 1 to 3, preferably 3.

Component (A) should have a kinematic viscosity at 25°C of 10 to 10,000 mm²/s, preferably 10 to 5,000 mm²/s as measured by an Ostwald viscometer. If the kinematic viscosity is lower than 10 mm²/s, the resulting silicone composition yields oil bleeding. If the kinematic viscosity is higher than 10,000 mm²/s, the resulting silicone composition becomes less flowable.

Component (A) is blended in an amount of 5 to 100 parts by weight, preferably 15 to 85 parts by weight, more preferably 55 to 80 parts by weight, provided that the total of components (A) and (B) is 100 parts by weight. As long as the amount of component (A) blended is in the range, the heat conductive silicone composition maintains good flow and working efficiency and facilitates heavy loading of the composition with heat conductive fillers as components (C) and (D) to be described later. If the amount of component (A) blended is less than 5 parts by weight, sometimes the composition cannot be heavily loaded with heat conductive fillers as components (C) and (D).

Preferred examples of component (A) are given below. Me stands for methyl hereinafter.

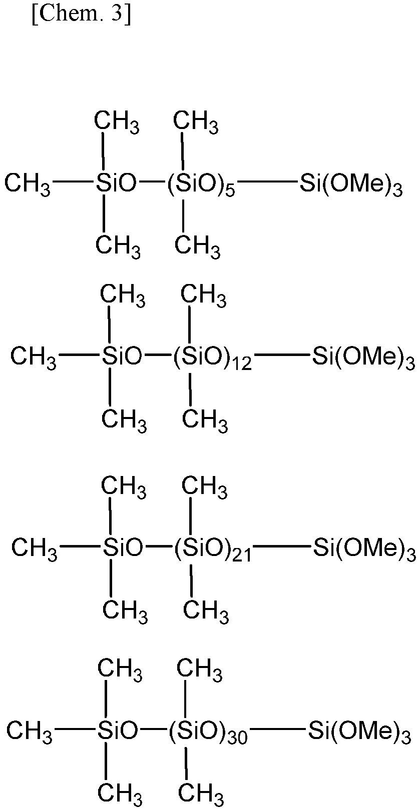

### [Component (B)]

Component (B) is an organopolysiloxane represented by the average compositional formula (2):

R³_{c}SiO_{(4-c)/2} (2)

wherein R³ is independently a substituted or unsubstituted C₁-C₁₈ monovalent hydrocarbon group, and c is a number of 1.8 to 2.2, and having a kinematic viscosity at 25°C of 10 to 100,000 mm²/s. Component (B) is optionally used for the purpose of imparting the functions of viscosity adjusting agent and tackifier to the inventive heat conductive silicone composition while its function is not limited thereto. Component (B) may be used alone or in admixture of two or more.

R³ is independently a substituted or unsubstituted C₁-C₁₈ monovalent hydrocarbon group. Examples of R³ include alkyl groups such as methyl, ethyl, propyl, hexyl, octyl, decyl, dodecyl, tetradecyl, hexadecyl, and octadecyl, cycloalkyl groups such as cyclopentyl and cyclohexyl, alkenyl groups such as vinyl and allyl, aryl groups such as phenyl and tolyl, aralkyl groups such as 2-phenylethyl and 2-methyl-2-phenylethyl, and halogenated hydrocarbon groups such as 3,3,3-trifluoropropyl, 2-(perfluorobutyl)ethyl, 2-(perfluorooctyl)ethyl, and p-chlorophenyl. Inter alia, methyl, phenyl and C₆-C₁₈ alkyl groups are preferred.

As viewed from the consistency required for the composition to function as a heat conductive silicone composition, c is a number of 1.8 to 2.2, preferably 1.9 to 2.1.

Component (B) has a kinematic viscosity at 25°C of 10 to 100,000 mm²/s, preferably 10 to 10,000 mm²/s. If the kinematic viscosity is lower than 10 mm²/s, the resulting silicone composition is likely to yield liquid separation and oil bleeding. If the kinematic viscosity is higher than 100,000 mm²/s, the resulting silicone composition becomes less flowable and inefficient to work.

Examples of component (B) are given below.

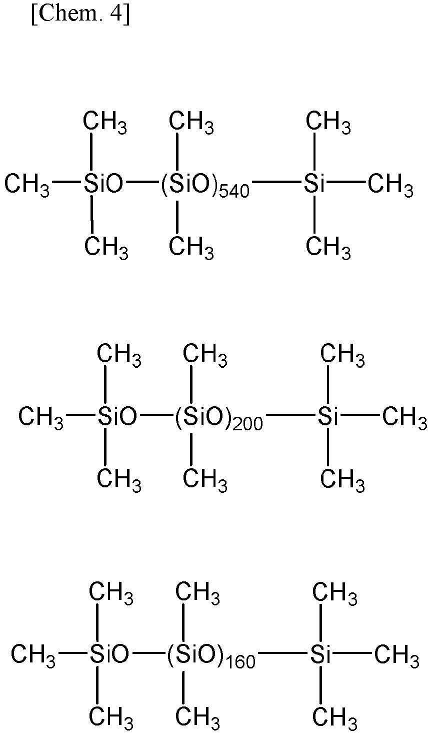

Provided that the total amount of components (A) and (B) is 100 parts by weight, component (B) is blended in an amount of 0 to 95 parts by weight, meaning that the omission of component (B) is included in the invention. The blending amount is preferably 15 to 85 parts by weight, more preferably 20 to 45 parts by weight. As long as the amount of component (B) added is in the range, the silicone composition maintains smooth flow and working efficiency and facilitates heavy loading of the silicone composition with heat conductive fillers as components (C) and (D) to be described later. If the amount of component (B) exceeds 95 parts by weight, heavy loading of the silicone composition with heat conductive fillers as components (C) and (D) is sometimes inhibited.

### [Component (C)]

Component (C) is an aluminum nitride powder having an oxygen content of up to 0.5% by weight, a BET specific surface area of up to 1.0 m²/g, and an average particle size of 3 to 40 µm, in which the proportion of coarse particles with a particle size of 44 to 105 µm in a volume basis laser diffraction type particle size distribution is up to 10.0% by weight based on overall component (C). Component (C) may be used alone or in admixture of two or more.

Component (C) should have an oxygen content of up to 0.5% by weight, preferably up to 0.2% by weight. The lower limit which is not critical may be 0.01% by weight or even 0% by weight. If the oxygen content, which is an index of percent nitrogenation of component (C), exceeds 0.5% by weight, the composition may experience a lowering of thermal conductivity and degradation of thermal properties after moistening due to reduction of crystallite size and a loss of chemical purity as component (C). Notably, the oxygen content of component (C) is analyzed through measurement by an oxygen/nitrogen analyzer and comparison with the standard sample of silicon nitride. As the oxygen/nitrogen analyzer, EMGA-920 by Shimadzu Corp. may be used, for example.

From the aspect of increasing the thermal conductivity of the composition, component (C) should preferably have a lower BET specific surface area (as measured by the nitrogen gas adsorption method), specifically up to 1.0 m²/g, more preferably up to 0.9 m²/g. Although the lower limit of BET specific surface area need not be particularly set, the lower limit may be 0.05 m²/g as viewed from the upper limit of average particle size and the proportion of coarse particles, both specified for component (C). The BET specific surface area of component (C) may be analyzed, for example, by Macsorb^{®} HM Model-1201 (Mountech Co., Ltd.).

Component (C) should preferably have an average particle size of 3 to 40 µm, more preferably 4 to 40 µm, in terms of the (volume basis) particle size distribution by laser diffraction. An average particle size of less than 3 µm can cause difficulty of resin filling and an extreme viscosity buildup. On the other hand, an average particle size in excess of 40 µm is preferable from the aspect of increasing the thermal conductivity of the composition, but allows for quick progress of oil separation with the lapse of time. Also, the proportion of coarse particles of 44 to 105 µm in a volume basis laser diffraction type particle size distribution should be up to 10.0% by weight, preferably up to 8.0% by weight, based on overall component (C). When the proportion of coarse particles of 44 to 105 µm is up to 10.0% by weight based on overall component (C), both the desired thermal resistance and high thermal conductivity are met. Although the lower limit of the proportion of coarse particles of 44 to 105 µm in a laser diffraction type particle size distribution need not be particularly set, the lower limit may be about 0.01% by weight. If the proportion of coarse particles of 44 to 105 µm exceeds 10.0% by weight of overall component (C), there is a tendency that the composition fails to take a thickness of 44 to 105 µm and to achieve the desired thermal resistance.

Reducing nitrogenation and direct nitrogenation methods are suitable for component (C), although the method is not particularly limited as long as the above-mentioned requirements are met. The product obtained from the direct nitrogenation method is preferred because the product having an oxygen content of up to 0.5% by weight is more readily obtained. The product obtained from the direct nitrogenation method has a higher chemical purity and better thermal properties after moistening.

The method of preparing component (C), which is not particularly limited, may be carried out according to the well-known direct nitrogenation method (inclusive of combustion synthesis). One exemplary method is nitrogenation of metallic aluminum powder alone in a nitrogen atmosphere of 0.2 to 3 MPa. The product may be ground if necessary. The grinding method may be carried out according to any well-known method using a ball mill, jet mill or crusher.

The method may further include the step of heat treating component (C) obtained from the direct nitrogenation method at 1,600 to 2,000°C in a non-oxidative atmosphere. Through this step, angular particles of irregular shape are converted to rounded particles from which angular corners have been removed. Thus, the step is adequate for lowering the viscosity of the silicone composition. A temperature of lower than 1,600°C is difficult to convert particles into rounded shape whereas a temperature in excess of 2,000°C may cause component (C) to sinter together, failing to reach the desired average particle size.

Spherical, polyhedral and irregular shapes are suitable for component (C), but the shape is not particularly limited as long as the benefits of the invention are not impaired. The rounded shape is preferred because the initial viscosity of the silicone composition is lowered, the viscosity change during treatment at 200°C is little, and heat resistance is more improved. As used herein, the term "rounded" refers to a shape having an aspect ratio of up to 2.0.

### [Component (D)]

Component (D) is an irregular shape zinc oxide powder having an average particle size of 0.01 µm to less than 3.0 µm in which the proportion of coarse particles with a sieve particle size of 25 to 45 µm is up to 0.2% by weight based on overall component (D). Component (D) may be used alone or as a mixture of two or more. Component (D) functions as a heat conductive filler in the silicone composition.

Component (D) should have an average particle size of 0.01 µm to less than 3.0 µm, preferably 0.01 to 2.0 µm. As long as the average particle size is in the range, component (D) is likely to have so high a bulk density and so small a specific surface area as to facilitate heavy loading of the silicone composition with component (D). If the average particle size is less than 0.01 µm, the composition may be difficultly loaded with such powder and have an extremely high viscosity. If the average particle size is as large as 3.0 µm or more, oil separation may readily take place.

Both the desired thermal resistance and high thermal conductivity are met as long as the proportion of coarse particles with a screen particle size of 25 to 45 µm is up to 0.2% by weight based on the overall powder. Although the lower limit of the proportion of coarse particles with a screen particle size of 25 to 45 µm is not particularly limited, the lower limit may be about 0.01% by weight in most cases. If the proportion of coarse particles of 25 to 45 µm is more than 0.2% by weight based on the overall powder, there is a tendency that the composition fails to take a thickness of 25 to 45 µm and to achieve the desired thermal resistance.

Component (D) should preferably have a purity of at least 99.5% by weight, and more preferably at least 99.8% by weight from the standpoint of impurities such as Pb and Cd.

Component (D) is preferably of irregular shape. The shape of component (D) may be spherical, rounded, rod, needle or disk shape, for example, and is not particularly limited as long as the benefits of the invention are not compromised.

Components (C) and (D) are blended in a weight ratio of from 5.0:5.0 to 9.5:0.5, preferably from 6.0:4.0 to 9.0:1.0. If the proportion of component (C) is less than 5.0, there is a tendency that the composition is difficultly loaded with the filler. If the proportion of component (C) exceeds 9.5, dense loading of the filler is inhibited, tending to reduce heat conduction.

In the silicone composition, the total content of components (C) and (D) is 70 to 85% by volume, desirably 70 to 83% by volume of the overall composition. If this content is less than 70% by volume, the silicone composition may be less heat conductive. If the content exceeds 85% by volume, loading of the composition with heat conductive fillers as components (C) and (D) may be inhibited.

The average particle size of components (C) and (D) may be determined by measuring the volume distribution of particles by a microtrack (laser diffraction scattering method), multiplying the measured value of particle size by the relative particle amount (fractional %), and dividing the product by the total (100%) of relative particle amounts. Specifically, measurement is carried out on a volume basis using laser diffraction type particle size distribution analyzer SALD-2300 (Shimadzu Corp.). A test sample is obtained by placing 50 cc of deionized water and 5 g of heat conductive powder on test in a glass beaker, stirring the contents with a spatula, and performing dispersing treatment on a ultrasonic cleaner for 10 minutes. Using a pipette, the solution of the heat conductive powder as dispersed is added one by one droplet to the sampler section of the analyzer. The analyzer is held for some time until the sample becomes stable enough to measure an absorbance. Measurement is carried out at the time when the absorbance becomes constant. In the case of the laser diffraction particle size distribution analyzer, the particle size distribution is computed from the data of the light intensity distribution of diffraction/scattering light through particles detected by the sensor. The average particle size is determined by multiplying the measured value of particle size by the relative particle amount (fractional %) and dividing the product by the total (100%) of relative particle amounts. The average particle size is the average diameter of particles. The proportion of coarse particles of 44 to 105 µm is readily confirmed from the particle size distribution of the overall powder as component (C).

### [Component (E)]

To the silicone composition, a volatile solvent in which components (A) and (B) are dispersible or dissolvable may be added as component (E). In an embodiment wherein the composition contains component (F) to be described later as well as components (A) and (B), the volatile solvent in which component (F) is also dispersible or dissolvable is preferred. Any solvent may be used as component (E) as long as components (A) and (B) and optionally (F) are dispersible or dissolvable therein. Component (E) may be used alone or in admixture.

Since the thermal conductivity of the heat conductive silicone composition is basically correlated to the percent loading of heat conductive filler, the thermal conductivity increases as the amount of heat conductive filler added is increased. However, as a matter of course, as the amount of heat conductive filler added is increased, there is a likelihood that the viscosity of a heat conductive silicone composition itself increases, and the dilatancy of the composition under applied shear stress becomes stronger. Especially in the case of screen printing, if a heat conductive silicone composition develops a strong dilatancy upon squeezing, then the flow of the composition is temporarily intensely restrained so that the composition cannot pass through a screen mask and screen mesh, resulting in tremendous degradation of printability. As discussed above, it is difficult in the prior art to apply a heat conductive silicone composition heavily loaded with a heat conductive filler, to heat sinks or the like easily, uniformly and thinly by screen printing. The heat conductive silicone composition of the invention which is heavily loaded with heat conductive fillers as components (C) and (D) and which contains a volatile solvent as component (E) tends to experience a sharp drop of viscosity and develop little dilatancy, so that the composition is improved in applicability, that is, easily applicable to heat sinks or the like by screen printing. After application, component (E) is readily volatilized at room temperature or by positive heating. Accordingly, in the practice of the invention, the heat conductive silicone composition which is heavily loaded with heat conductive fillers can be applied to heat sinks or the like easily, uniformly and thinly by screen printing.

Component (E) preferably has a boiling point in the range of 80 to 260°C. This range of boiling point is effective for preventing component (E) from quickly volatilizing off the composition during application thereof, thus suppressing the composition from building up its viscosity and keeping the composition effectively applicable. Since none or little of component (E) is left in the composition after it has been applied, heat dissipating properties are improved.

Examples of component (E) include toluene, xylene, acetone, methyl ethyl ketone, cyclohexanone, n-hexane, n-heptane, butanol, isopropanol (IPA), and isoparaffin base solvents. From the standpoints of safety, health and efficient working, isoparaffin base solvents are preferred, with isoparaffin base solvents having a boiling point of 80 to 260°C being more preferred.

When component (E) is blended in the inventive composition, the amount of component (E) blended is preferably up to 100 parts by weight, more preferably up to 75 parts by weight per 100 parts by weight of components (A) and (B) combined. An amount of component (E) in the range is effective for preventing components (C) and (D) from quickly settling down, and so the composition is improved in shelf stability.

### [Component (F)]

Component (F) is an alkoxysilane represented by the general formula (3):

R⁴_{d}R⁵ₑSi(OR⁶)_{4-d-e} (3)

wherein R⁴ is independently a C₉-C₁₅ alkyl group, R⁵ is independently a substituted or unsubstituted C₁-C₈ monovalent hydrocarbon group, R⁶ is independently a C₁-C₆ alkyl group, d is an integer of 1 to 3, e is an integer of 0 to 2, and d+e is an integer of 1 to 3.

Component (F) is a wetter and an additive for preventing component (A) from altering under hot humid conditions. When heat conductive fillers as components (C) and (D) are surface-treated with component (F), the wettability of components (C) and (D) with component (A) is improved. As a result, component (F) assists in heavy loading of components (C) and (D). Also, component (F), when used along with component (A), acts to control contact of component (A) with water vapor under hot humid conditions. As a result, component (F) prevents the silicone composition from degrading its performance due to the alteration of component (A) caused by hydrolysis under hot humid conditions. Component (F) may be used alone or in admixture of two or more.

R⁴ is independently a C₉-C₁₅ alkyl group. Examples thereof include nonyl, decyl, dodecyl, tetradecyl, and pentadecyl, with decyl being most preferred. If the carbon count is less than 9, the wettability of the heat conductive fillers as components (C) and (D) with component (F) may be insufficient. If the carbon count is more than 15, component (F) is likely to solidify at normal temperature and inconvenient to handle, and the resulting composition is likely to lose heat resistance and flame retardance.

R⁵ is independently a substituted or unsubstituted C₁-C₈ monovalent hydrocarbon group which may be saturated or unsaturated. Examples thereof include alkyl groups such as methyl, ethyl, propyl, hexyl and octyl, cycloalkyl groups such as cyclopentyl and cyclohexyl, alkenyl groups such as vinyl and allyl, aryl groups such as phenyl and tolyl, aralkyl groups such as 2-phenylethyl and 2-methyl-2-phenylethyl, and halogenated hydrocarbon groups such as 3,3,3-trifluoropropyl, 2-(nonafluorobutyl)ethyl, and p-chlorophenyl. Inter alia, methyl, ethyl and vinyl are preferred.

R⁶ is independently a C₁-C₆ alkyl group. Examples thereof include methyl, ethyl, propyl, butyl, pentyl and hexyl, with methyl and ethyl being preferred.

The subscript d is typically an integer of 1 to 3, preferably 1, e is an integer of 0 to 2, and d+e is an integer of 1 to 3.

Examples of component (F) include

C₁₀H₂₁Si(OCH₃)₃ ,

C₁₂H₂₅Si(OCH₃)₃ ,

C₁₂H₂₅Si(OC₂H₅)₃ ,

C₁₀H₂₁ Si(CH₃)(OCH₃)₂ ,

C₁₀H₂₁Si(C₆H₅)(OCH₃)₂ ,

C₁₀H₂₁Si(CH₃)(OC₂H₅)₂ ,

C₁₀H₂₁Si(CH=CH₂)(OCH₃)₂, and

C₁₀H₂₁ Si(CH₂CH₂CF₃)(OCH₃)₂ .

When used, the amount of component (F) blended is preferably 0.1 to 50 parts by weight, more preferably 1 to 20 parts by weight per 100 parts by weight of components (A) and (B) combined. As long as the amount is in the range, the wetter effect and temperature/humidity resisting effect become greater in proportion to the addition amount, leading to an economical benefit. Since component (F) is somewhat volatile, there can arise a phenomenon that when the heat conductive silicone composition comprising component (F) is allowed to stand in an open system, component (F) evaporates off and the composition becomes gradually harder. The phenomenon is avoidable as long as the amount is in the range.

### [Other additives]

Any additives and fillers which are commonly used may be further added as optional components to the silicone composition as long as the benefits of the invention are not compromised. Examples include fluorine-modified silicone surfactants, colorants such as carbon black, titanium dioxide and red iron oxide, flame retardants such as platinum catalysts, metal oxides such as iron oxide, titanium oxide and cerium oxide, and metal hydroxides. There may also be added anti-settling agents for the heat conductive fillers at high temperature, for example, finely divided silica such as precipitated silica or fired silica, and thixotropic agents. When such optional components are blended, their amount is up to 1% by weight, preferably up to 0.5% by weight of the silicone composition.

### [Preparation of composition]

The silicone composition is prepared by mixing components (A) to (D) and optional components on a mixer such as dough mixer, kneader, gate mixer, or planetary mixer. The composition thus obtained achieves a marked improvement in thermal conductivity and offers satisfactory workability, durability and reliability.

### [Heat conductive silicone composition]

### [Thermal conductivity]

The silicone composition has a thermal conductivity at 25°C of 4.0 to 9.2 W/m·K, preferably 5.0 to 9.2 W/m·K, as measured by the hot disk method according to ISO 22007-2. The silicone composition gives such a thermal conductivity. For the measurement of thermal conductivity of the composition, for example, a meter TPS 2500S by Kyoto Electronics Mfg. Co., Ltd. may be used.

### [Viscosity]

The silicone composition has a viscosity at 25°C of 5 to 800 Pa·s, preferably 5 to 800 Pa·s, more preferably 5 to 500 Pa·s as measured by a spiral viscometer with rotor A at rotational speed 10 rpm. As long as the viscosity falls in the range, the silicone composition is so flowable that it may be improved in working, specifically dispensing or screen printing, and easy to thinly coat on substrates. After the silicone composition is degraded by heating at 200°C for 100 hours, the silicone composition preferably has a viscosity at 25°C of up to 1,000 Pa·s, more preferably up to 800 Pa·s, even more preferably up to 400 Pa·s as measured by a spiral viscometer with rotor A at rotational speed 10 rpm. The silicone composition is preferably of such uncurable liquid type. For viscosity measurement, a spiral viscometer with rotor A at rotational speed 10 rpm is used. For example, a spiral viscometer of Type PC-10AA by Malcom Co., Ltd. may be used for viscosity measurement.

### [Thermal resistance]

After the silicone composition is allowed to stand in 130°C/85% RH atmosphere for 96 hours, it preferably has a thermal resistance at 25°C of up to 15 mm²-K/W, more preferably up to 12 mm²-K/W as measured by the laser flash method. A thermal resistance within the range insures that even when the composition is applied to a heat-generating part having a great heat release, the composition is effective for dissipating the heat from the heat-generating part to a heat-dissipating part. Notably, the measurement of thermal resistance by the laser flash method may be performed according to ASTM E 1461.

### [Volume resistivity]

The silicone composition should preferably have a volume resistivity of at least 10⁹ Ω·cm, more preferably at least 10¹⁰ Ω·cm. Although the upper limit is not critical, the volume resistivity may be up to 10¹⁶ Ω·cm. Notably, volume resistivity may be measured according to JIS K 6911. The detail is later described in Examples.

### [Application of composition]

The heat conductive silicone composition is applied or coated to heat generators or heat dissipators. Suitable heat generators are general power supplies; electronic devices such as supply power transistors, power modules, thermistors, thermo-couples, and temperature sensors; and heat-generating electronic parts including integrated circuit parts such as LSIs and CPUs. Suitable heat dissipators include heat-dissipating parts such as heat spreaders and heat sinks; heat pipes; and radiating fins. The application may be performed by screen printing, for example. In the screen printing, a metal mask or screen mesh may be used. When the composition is applied so as to intervene between a heat generator and a heat dissipator, the heat is efficiently conducted from the heat generator to the heat dissipator, that is, the heat is effectively removed from the heat generator.

The heat conductive silicone composition is insulating, satisfactorily heat conductive, and effectively workable due to the maintenance of smooth flow. The composition is fully adhesive to heat generating electronic parts and heat dissipating parts. Then, when the composition is applied so as to intervene between a heat generator and a heat dissipator, the heat can be efficiently conducted from the heat generator to the heat dissipator. Furthermore, the silicone composition is fully durable under hot or hot and humid conditions. Then, when the composition is used for heat dissipation of general power supplies and electronic devices, and integrated circuit parts such as LSIs and CPUs used in electronic devices such as digital video disk drives, quite satisfactory reliability can be imparted. The silicone composition is successful in significantly improving the safety and life of heat generating electronic parts and electronic devices using the same.

### EXAMPLES

Examples and Comparative Examples are given below for further illustrating the invention although the invention is not limited thereto. In the Examples, "%" is by weight, the ratio is by weight, and the amount of each component in Tables is the net amount of the component, unless otherwise stated.

The components used in compositions within the scope of the invention are identified below.
(A) Organopolysiloxane having a silicon-bonded alkoxy group
   A-1: Organopolysiloxane having a kinematic viscosity of 35 mm²/s, represented by the following formula 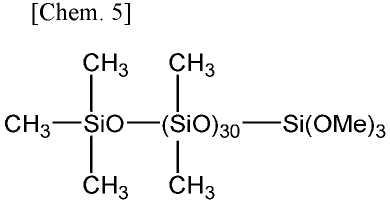
(B) Organopolysiloxane
   B-1: Organopolysiloxane having a kinematic viscosity of 500 mm²/s, represented by the following formula 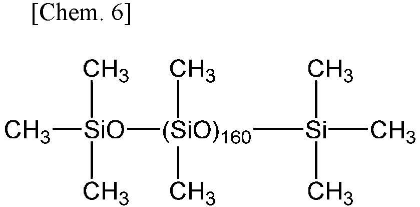
(C) Aluminum nitride powder

**[Table 1]**

| Type | Oxygen content (%) | BET specific surface area (m²/g) | Average particle size (µm) | Proportion of coarse particles (%) | Preparation of aluminum nitride | Particle shape |
|---|---|---|---|---|---|---|
| C-1 | 0.07 | 0.20 | 20.9 | 8.76 | direct nitrogenation | rounded |
| C-2 | 0.10 | 0.18 | 33.0 | 9.42 | direct nitrogenation | rounded |
| C-3 | 0.20 | 0.70 | 5.2 | 0.00 | direct nitrogenation | rounded |
| C-4 | 0.30 | 0.40 | 16.0 | 7.92 | direct nitrogenation | irregular |
| C-5 Comparison | 0.64 | 2.34 | 1.5 | 0.00 | direct nitrogenation | rounded |
| C-6 Comparison | 0.03 | 0.12 | 53.5 | 22.67 | direct nitrogenation | rounded |
| C-7 comparison | 0.59 | 0.08 | 38.3 | 9.54 | reductive nitrogenation | spherical |

The average particle size shown in Table 1 was computed from the overall particle size distribution obtained as the laser diffraction particle size distribution by the method of measuring average particle size of components (C) and (D) as defined above. The proportion of coarse particles is a percentage of coarse particles with a particle size of 44 to 105 µm, based on the overall particle size distribution, obtained as the laser diffraction type particle size distribution. Component (C) of rounded shape was obtained by heat treating component (C), prepared by the direct nitrogenation method, at 1,750°C in a non-oxidative atmosphere.
(D) Zinc oxide powder (average particle size 0.27 µm, coarse particle proportion is 0.0% calculated as an undersize fraction through a sieve with an opening 45 µm according to JIS Z 8801-1)

The average particle size shown here was computed from the overall particle size distribution obtained as the laser diffraction particle size distribution. The coarse particle proportion is based on sieve size analysis. The same holds true to the proportion of coarse particles of 25 to 45 µm, based on the overall particle size distribution, obtained as the laser diffraction type particle size distribution.

(E) Volatile solvent in which A-1, B-1 and F-1 are dispersible or dissolvable
E-1: Isosol^{®} 400 (trade name, isoparaffin solvent, boiling point 210-254°C, ENEOS Corp.)
(F) Alkoxysilane
F-1: Alkoxysilane represented by the following formula

   C₁₀H₂₁Si(OCH₃)₃

### [Examples and Comparative Examples]

### [Preparation method]

Compositions of Examples and Comparative Examples were obtained by mixing components (A) to (F) as follows. Specifically, in a 5-L planetary mixer (Inoue Mfg., Inc.), components (A) to (D) were metered in the compositional ratio (parts by weight) shown in Tables 2 and 3 and mixed at 150°C for 1 hour under a reduced pressure of 30 mmHg or below. While mixing, the mixture was cooled to room temperature. When components (E) and (F) were blended, components (E) and (F) were added to the cooled mixture in the compositional ratio shown in Tables 2 and 3 and mixed until uniform. The properties of the resulting compositions were measured by the tests shown below. The results are also shown in Tables 2 and 3.

### [Viscosity measurement]

After the composition was allowed to stand in a thermostatic chamber at 25°C for 24 hours, its viscosity was measured by a spiral viscometer (viscometer Type PC-10AA by Malcom Co., Ltd.) with rotor A at a rotational speed 10 rpm.

### [Viscosity measurement after heat degradation]

After the composition was degraded by heating in a dryer at 200°C for 100 hours and allowed to stand in a thermostatic chamber at 25°C for 24 hours, its viscosity was measured as above.

### [Thermal conductivity measurement]

Two samples were prepared by wrapping the composition with a kitchen wrap so carefully as to avoid the entry of bubbles. After each sample was inserted in the sensor of a thermal conductivity meter (Model TPS-2500S by Kyoto Electronics Mfg. Co., Ltd.), its thermal conductivity was measured at 25°C.

### [Preparation of specimen for measuring thickness and thermal resistance]

A specimen was prepared by sandwiching the composition of 75 µm thick between two aluminum disks of diameter 12.6 mm and thickness 1 mm and compressing the assembly under a pressure of 0.15 MPa at 25°C for 60 minutes.

### [Thickness measurement]

The thickness of the composition was determined by measuring the thickness of the specimen by a micrometer (Mitutoyo Corp.) and subtracting the total thickness of two aluminum disks from the measurement.

### [Thermal resistance measurement]

Using the specimen, the thermal resistance (unit: mm²-K/W) of the composition was measured at 25°C by a thermal resistance meter based on laser flash method (xenon flash analyzer: LFA447 NanoFlash by Netzsch).

### [Measurement of thermal resistance after hot humid holding]

The specimen after the thermal resistance measurement was allowed to stand in a 130°C/85% RH atmosphere for 96 hours. Thereafter, the thermal resistance (unit: mm²·K/W) of the composition was again measured at 25°C by the thermal resistance meter.

### [Measurement of volume resistivity]

A sample of 1.0 mm thick was prepared for measurement by the guarded electrode method according to JIS K 6911. After a voltage of 500 V was applied across the electrodes for 1 minute, volume resistivity was measured.

**[Table 2]**

| Blending amount (pbw) | Example | | | | | | | | | |
|---|---|---|---|---|---|---|---|---|---|---|
| | 1 | 2 | 3 | 4 | 5 | 6 | 7 | 8 | 9 | 10 |
| A-1 | 70 | 70 | 70 | 70 | 70 | 70 | 70 | 80 | 60 | 70 |
| B-1 | 30 | 30 | 30 | 30 | 30 | 30 | 30 | 20 | 40 | 30 |
| C-1 | 798 | | | | 942 | 942 | 942 | 942 | 942 | 1413 |
| C-2 | | 798 | | | | | | | | |
| C-3 | | | 798 | | | | | | | |
| C-4 | | | | 798 | | | | | | |
| D-1 | 532 | 532 | 532 | 532 | 628 | 628 | 628 | 628 | 628 | 157 |
| E-1 | | | | | | 15 | 15 | | | |
| F-1 | | | | | | | 1 | | | |
| Total of (C) and (D) (vol%) | 77.0 | 77.0 | 77.0 | 77.0 | 79.8 | 76.8 | 76.7 | 79.8 | 79.8 | 81.9 |
| (C)/(D) weight ratio | 6/4 | 6/4 | 6/4 | 6/4 | 6/4 | 6/4 | 6/4 | 6/4 | 6/4 | 9/1 |
| Viscosity (Pa·s) | 252 | 261 | 719 | 304 | 512 | 102 | 88 | 312 | 672 | 723 |
| Viscosity (Pa·s) after 200°C×100h | 306 | 301 | 780 | 378 | 579 | 298 | 272 | 345 | 741 | 795 |
| Thermal conductivity (W/m·K) | 6.7 | 7.1 | 5.0 | 6.5 | 7.7 | 6.6 | 6.6 | 7.7 | 7.7 | 7.5 |
| Thickness (µm) | 59 | 73 | 27 | 53 | 68 | 54 | 55 | 60 | 74 | 75 |
| Thermal resistance (mm²·K/W) | 8.8 | 10.3 | 5.4 | 8.1 | 8.8 | 8.2 | 8.3 | 7.8 | 9.6 | 10.0 |
| Thermal resistance (mm²·K/W) after hot humid holding | 9.4 | 11.6 | 6.9 | 9.1 | 9.9 | 8.8 | 8.6 | 8.2 | 11.9 | 11.2 |
| Volume resistivity (Ω·cm) | 6.1E+10 | 7.5E+10 | 4.2E+10 | 3.7E+10 | 5.7E+10 | 5.8E+10 | 6.1E+10 | 5.5E+10 | 5.6E+10 | 3.8E+10 |

| | | | | | | | | | | |
|---|---|---|---|---|---|---|---|---|---|---|
| E+10 designates ×10¹⁰. | | | | | | | | | | |

**[Table 3]**

| Blending amount (pbw) | Comparative Example | | | | | | | | | |
|---|---|---|---|---|---|---|---|---|---|---|
| | 1 | 2 | 3 | 4 | 5 | 6 | 7 | 8 | 9 | 10 |
| A-1 | 70 | 70 | 90 | 90 | 70 | 70 | 70 | 70 | 70 | 70 |
| B-1 | 30 | 30 | 10 | 10 | 30 | 30 | 30 | 30 | 30 | 30 |
| C-5 | 798 | 564 | 564 | 738 | | | | | | |
| C-6 | | | | | 798 | 972 | 798 | | | |
| C-7 | | | | | | | | 798 | 942 | 942 |
| D-1 | 532 | 376 | 376 | 82 | 532 | 243 | 532 | 532 | 628 | 628 |
| E-1 | | | | | | | 15 | | | 15 |
| F-1 | | | | | | | 1 | | | 1 |
| Total of (C) and (D) (vol%) | 77.0 | 70.3 | 70.3 | 70.3 | 77.0 | 77.0 | 73.6 | 77.0 | 79.8 | 76.7 |
| (C)/(D) weight ratio | 6/4 | 6/4 | 6/4 | 9/1 | 6/4 | 8/2 | 7/3 | 6/4 | 6/4 | 6/4 |
| Viscosity (Pa·s) | * | 847 | 763 | * | 326 | * | 94 | 242 | 353 | 78 |
| Viscosity (Pa·s) after 200°C×100h | | 892 | 803 | | unmeasurable | | unmeasurable | 354 | 422 | 274 |
| Thermal conductivity (W/mK) | | 3.8 | 3.8 | | 9.4 | | 8.2 | 6.1 | 7.2 | 5.0 |
| Thickness (µm) | | 15 | 14 | | 142 | | 131 | 73 | 76 | 69 |
| Thermal resistance (mm²·K/W) | | 4.0 | 3.7 | | 15.1 | | 16.0 | 12.0 | 10.6 | 13.8 |
| Thermal resistance (mm²·K/W) after hot humid holding | | 12.6 | 11.9 | | 16.2 | | 16.9 | 19.7 | 18.6 | 22.2 |
| Volume resistivity (Ω·cm) | | 4.1E+10 | 4.2E+10 | | 9.6E+10 | | 8.9E+10 | 1.9E+11 | 3.5E+11 | 2.2E+ 11 |

| | | | | | | | | | | |
|---|---|---|---|---|---|---|---|---|---|---|
| * indicates unmeasurable because of inhibited kneading E+10 designates ×10¹⁰. | | | | | | | | | | |

## Claims

1. A heat conductive silicone composition comprising
(A) 5 to 100 parts by weight of an organopolysiloxane represented by the general formula (1): 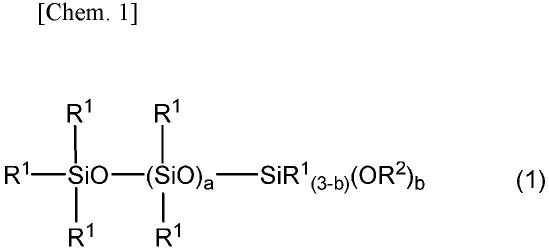 wherein R¹ is independently a substituted or unsubstituted monovalent hydrocarbon group, R² is independently an alkyl, alkoxyalkyl, alkenyl or acyl group, a is an integer of 5 to 100, and b is an integer of 1 to 3, and having a kinematic viscosity at 25°C of 10 to 10,000 mm²/s,
(B) 0 to 95 parts by weight of an organopolysiloxane represented by the average compositional formula (2):
R³_{c}SiO_{(4-c)/2} (2)
wherein R³ is independently a C₁-C₁₈ substituted or unsubstituted monovalent hydrocarbon group and c is a number of 1.8 to 2.2, and having a kinematic viscosity at 25°C of 10 to 100,000 mm²/s, the total amount of components (A) and (B) being 100 parts by weight,
(C) an aluminum nitride powder having an oxygen content of up to 0.5% by weight, a BET specific surface area of up to 1.0 m²/g, and an average particle size of 3 to 40 µm, in which the proportion of coarse particles with a particle size of 44 to 105 µm in a volume basis laser diffraction type particle size distribution is up to 10.0% by weight based on overall component (C), and
(D) an irregular shape zinc oxide powder having an average particle size of 0.01 µm to less than 3.0 µm in which the proportion of coarse particles with a sieve particle size of 25 to 45 µm is up to 0.2% by weight based on overall component (D),
components (C) and (D) being blended in a weight ratio of from 5.0:5.0 to 9.5:0.5, the total amount of powder components (C) and (D) being 70 to 85% by volume of the overall composition,
the silicone composition having a thermal conductivity of 4.0 to 9.2 W/m·K as measured by the hot disk method according to ISO 22007-2 and a viscosity at 25°C of 5 to 800 Pa·s as measured by a spiral viscometer with rotor A at a rotational speed 10 rpm.

2. The silicone composition of claim 1 wherein component (C) is an aluminum nitride powder of rounded shape.

3. The silicone composition of claim 1, further comprising (E) a volatile solvent for dispersing or dissolving components (A) and (B), in an amount of up to 100 parts by weight per 100 parts by weight of components (A) and (B) in total.

4. The silicone composition of claim 1, further comprising (F) 0.1 to 50 parts by weight of an alkoxysilane represented by the general formula (3):
R⁴_{d}R⁵ₑSi(OR⁶)_{4-d-e} (3)
wherein R⁴ is independently a C₉-C₁₅ alkyl group, R⁵ is independently a C₁-C₈ substituted or unsubstituted monovalent hydrocarbon group, R⁶ is independently a C₁-C₆ alkyl group, d is an integer of 1 to 3, e is an integer of 0 to 2, and d+e is an integer of 1 to 3, with which components (C) and (D) are surface-treated.

5. The silicone composition of claim 1 which has a viscosity at 25°C of up to 1,000 Pa·s as measured by a spiral viscometer at a rotational speed of 10 rpm after it is degraded by heating at 200°C for 100 hours.

6. The silicone composition of claim 1 which has a thermal resistance at 25°C of up to 15 mm²-K/W as measured by the laser flash method after it is allowed to stand in a 130°C/85% RH atmosphere for 96 hours.

7. The silicone composition of claim 1, having a volume resistivity of at least 10⁹ Ω·cm.

8. A method of preparing the heat conductive silicone composition of any one of claims 1 to 7, comprising the step of mixing components (A) to (D).
